# EUROPÄISCHE PATENTSCHRIFT

(11) **EP 2 816 686 B1**
(45) Veröffentlichungstag und Bekanntmachung des Hinweises auf die Patenterteilung: **28.06.2017**
(21) Anmeldenummer: 13172967.5
(22) Anmeldetag: 20.06.2013
(51) Int. Cl.: H02G 3/04

(54) **Kabelschutzrohr mit Längsverschluss sowie Vorrichtung und Verfahren zu dessen Herstellung**
Cable protection tube with longitudinal closure and device and method for the production of same
Tube de protection de câbles avec fermeture longitudinale ainsi que dispositif et procédé de fabrication de celui-ci

(43) Veröffentlichungstag der Anmeldung: 24.12.2014
(73) Patentinhaber: Symalit AG, 5600 Lenzburg (CH)
(72) Erfinder: Baumgartner, Bruno, 5512 Wohlenschwil (CH)
(74) Vertreter: Schmauder & Partner AG Patent- & Markenanwälte VSP

(56) Entgegenhaltungen:
- CH-A5- 652 249
- DE-U- 1 708 021
- FR-A3- 2 621 962

## Beschreibung

Die Erfindung betrifft ein Kabelschutzrohr mit Längsverschluss nach dem Oberbegriff des Patentanspruchs 1, einen Rohling zur Herstellung eines solchen Kabelschutzrohres nach dem Oberbegriff des Patentanspruchs 8, eine Vorrichtung zur Herstellung eines Kabelschutzrohres nach dem Oberbegriff des Patentanspruchs 10, sowie Verfahren zur Herstellung des Kabelschutzrohr-Rohlings bzw. des Kabelschutzrohres.

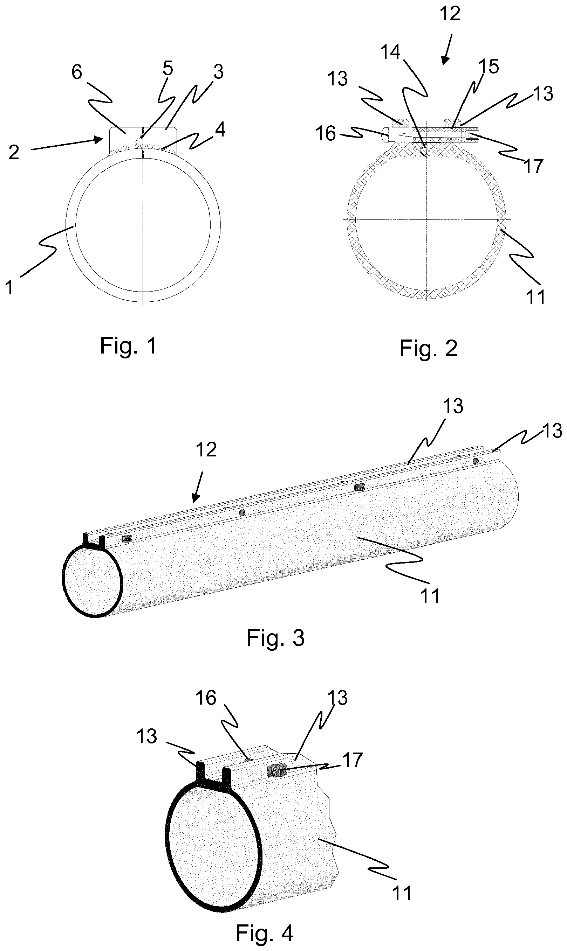

Kabelschutzrohre mit einem Längsverschluss sind seit längerer Zeit bekannt und dienen dazu, um in einem bestehenden Kabeltrassee alte Rohre auszutauschen. Die Kabelschutzrohre mit Längsverschluss werden dazu verlegt und die schon verlegten Kabel werden durch den Längsschlitz ins Innere des Kabelschutzrohres gelegt. Anschliessend werden die Kabelschutzrohre mit einem Bolzen radial verschlossen. Ein gattungsgemässes Kabelschutzrohr ist aus der CH 652 249 A5 bekannt. Die dort beschriebenen Kabelschutzrohre werden aus einem extrudierten Kunststoffrohr hergestellt, indem ein extrudiertes Rechteckprofil ab Rolle aus demselben Material auf das Kunststoffrohr geschweisst wird und das Rechteckprofil und die obere Wand des Kunststoffrohres mit einem Profilmesser in Längsrichtung aufgeschlitzt wird. Ferner wird das Rechteckprofil in regelmässigen Abständen von beispielsweise 50 cm mit Querbohrungen versehen, um einen Kunststoffbolzen einzuschieben und das Rohr wieder zu verschliessen, sodass das Rohr gegen axiale Verschiebung der Schlitzränder gesichert ist. In Figur 1 ist ein solches, nach dem Stand der Technik bekanntes Kabelschutzrohr 1 mit einem Längsverschluss 2 im Querschnitt dargestellt. Der Längsverschluss 2 wird von einem auf das Rohr 1 mit einer flächigen Schweissverbindung 4 aufgeschweissten Rechteckprofil 3 gebildet, welches an der Trennlinie 5 in Längsrichtung aufgeschlitzt ist. Die gestrichelte Linie 6 deutet schematisch die Querbohrung für einen nicht-dargestellten Bolzen an.

Die FR 2 621 962 A3 beschreibt ein gattungsgemässes Kabelschutzrohr aus Kunststoff mit einem Längsverschluss, welches in Längsrichtung mit einem Trennschlitz versehen ist, wobei der Längsverschluss einen den Trennschlitz überbrückenden Vorsprung umfasst, welcher zur Aufnahme von Verschlussbolzen dient. Der Vorsprung besteht aus zwei beidseits des Trennschlitzes angeordneten äusseren Längsrippen, welche einstückig mit dem Kabelschutzrohr ausgebildet sind.

Die DE 17 08 021 U beschreibt eine aus profiliertem Weichgummi oder einem sonstigen biegsamen Isoliermaterial bestehende, über ein Kabel zu streifende Schutzvorrichtung, die durch ihre hufeisenförmige Formgebung im Zusammenhang mit der Federkraft des verwendeten Materials ohne zusätzliche Einrichtungen auf dem Kabel festgeklemmt wird und nicht versehentlich abgestreift werden kann. Die Schutzvorrichtung ist zur händischen Anbringung auf einem isolierten Hausanschlusskabel oder dergleichen vorgesehen.

Durch das Schweissen des Rechteckprofils auf dem bestehenden Kunststoffrohr entstehen Spannungen im Rohr, weshalb sich das verschweisste Rohr in axialer Richtung je nach Spannung in einer Spirale verdreht und/oder in Längsrichtung verkrümmt. Da es bei diesem bekannten Kunststoffrohr nicht möglich ist, eine weisse Deckschicht aus Polyäthylen aufzubringen, wird das schwarze Kunststoffrohr an der Sonne sehr heiss, was zu einer zusätzlichen Verformung des Rohres führen kann. Dadurch können sich Schweissnähte zwischen dem Rechteckprofil und dem Rohr lösen. Der Aufwand für die Herstellung dieser bekannten Kabelschutzrohre ist beträchtlich und personalintensiv, und es muss aus mehreren Kunststoffteilen hergestellt werden.

Der vorliegenden Erfindung liegt nun die Aufgabe zugrunde, ein Kabelschutzrohr mit einem Längsverschluss anzugeben, welches mit weniger Materialaufwand einfacher herzustellen ist und keine wesentlichen Spannungen mehr aufweist, so dass ein Verkrümmen und spiralförmig Verdrehen des Rohres vermindert wird. Diese Aufgabe wird durch ein Kabelschutzrohr mit den Merkmalen des Patentanspruchs 1, durch einen Kabelschutzrohr-Rohling mit den Merkmalen des Anspruchs 8, durch eine Vorrichtung mit den Merkmalen des Patentanspruchs 10 sowie durch Verfahren mit den Merkmalen des Patentanspruchs 13 bzw. 14 gelöst.

Das erfindungsgemässe Kabelschutzrohr aus Kunststoff weist einen Längsverschluss auf und ist in Längsrichtung mit einem Trennschlitz versehen, wobei der Längsverschluss einen den Trennschlitz überbrückenden Vorsprung umfasst, welcher zur Aufnahme von Verschlussbolzen dient. Der Vorsprung besteht aus zwei beidseits des Trennschlitzes in einem Abstand zueinander; angeordneten äusseren Längsrippen, welche einstückig mit dem Kabelschutzrohr ausgebildet sind. Der Abstand zwischen den beiden Längsrippen beträgt das 0.5- bis 2-fache der durchschnittlichen Einzelbreite der Längsrippen.

Die Erfindung hat den grossen Vorteil, dass das Kabelschutzrohr einstückig aus einem Kunststoffmaterial mit einer einheitlichen Wandstärke im Bereich des Längsverschlusses herstellbar und somit in diesem Bereich spannungsfrei ist. Insbesondere ist das Kabelschutzrohr mittels Extrusion durch eine entsprechend dimensionierte Formgebungsöffnung herstellbar und weist demnach eine Translationssymmetrie entlang einer Längsachse des Kabelschutzrohres auf. Dabei erlaubt die Beabstandung der beiden Längsrippen, dass im Anschluss an die Extrusion eine effiziente und homogene Abkühlung des ganzen Längsverschlussbereichs möglich ist. Im Ergebnis kann das erfindungsgemässe Kabelschutzrohr mit wesentlich geringerem Aufwand hergestellt werden und braucht es kaum Lagerkapazität für die hergestellten Rohre, da diese unmittelbar nach der Herstellung eingesetzt werden. Das Herstellen auf Lager von verschiedenen Rohren mit unterschiedlichem Längsprofil fällt weg, da unmittelbar nach dem Auftrag produziert und ausgeliefert werden kann.

Bevorzugte Ausgestaltungen des Kabelschutzrohres sind in den abhängigen Patentansprüchen definiert.

Im vorliegenden Zusammenhang bezieht sich die Breite einer Längsrippe auf deren Abmessung in einer Tangentialrichtung zum Rohrquerschnitt senkrecht zur Längsrichtung des Trennschlitzes und senkrecht zur Radialverbindung zwischen Rohrmittelpunkt und Trennschlitz. Der Begriff "Einzelbreite" bezieht sich auf die Breite einer einzelnen der beiden Längsrippen. Der Begriff "durchschnittlich" bezieht sich auf die über die gesamte vorstehende Höhe einer Längsrippe gemittelte Breite, wobei im Falle unterschiedlich geformter Längsrippen der Mittelwert für die beiden Längsrippen heranzuziehen ist. Vorzugsweise sind die beiden Längsrippen allerdings identisch geformt.

Grundsätzlich könnte der Längsschnitt bei Betrachtung in Längsrichtung des Kabelschutzrohres geradlinig, insbesondere in Radialrichtung verlaufend ausgebildet sein. Besonders vorteilhaft ist es jedoch (Anspruch 2), wenn der Trennschlitz in Längsrichtung gesehen v-förmig ausgebildet ist, wobei die Achse der V-Form im Wesentlichen tangential zum Rohrprofil ausgerichtet ist. Insbesondere kann beim Aufweiten des Längsschlitzes, namentlich im Zuge des Einlegens oder Ersetzens von Kabeln, eine geringfügige Stauchung oder andersartige Verformung der Schlitzränder auftreten derart, dass beim anschliessenden Zusammenbringen der Schlitzränder und Anbringen der Verschlussbolzen die Schlitzränder in eine gegenseitig passende Formbeziehung zurückgedrängt werden. Damit lässt sich eine verbesserte Dichtwirkung am Längsverschluss erreichen.

Vorteilhafterweise ist die Wanddicke des Kabelschutzrohres im Bereich des Längsverschlusses verstärkt ausgebildet (Anspruch 3). Bevorzugt ist dabei, dass die Wanddicke im Bereich des Längsverschlusses das 1.4- bis 2.5-fache, insbesondere ungefähr das 1.7- bis 2.2-fache der Wanddicke des Kabelschutzrohres im anderen Bereich ist (Anspruch 4). Damit lässt sich eine mechanisch stabile Ausgestaltung des Längsverschlusses erreichen und gleichzeitig eine übermässig dicke Rohrwandung in den übrigen Bereichen vermeiden.

Als besonders vorteilhaft hat sich erwiesen, wenn die Wanddicke im Bereich des Längsverschlusses etwa der durchschnittlichen Einzelbreite der Längsrippen, insbesondere dem 0.8- bis 1.1-fachen der durchschnittlichen Einzelbreite entspricht (Anspruch 5). Damit wird eine möglichst homogene Abkühlung des extrudierten Rohrmaterials erreicht, was zur Vermeidung unerwünschter Spannungen und Verzüge beiträgt.

Grundsätzlich kommen als Material für das Kabelschutzrohr verschiedene thermoplastische Kunststoffe in Frage. Als besonders vorteilhaft für den Herstellungsprozess wie auch für die damit produzierten Kabelschutzrohre hat es sich erwiesen, wenn der Kunststoff ein hochverdichtetes Polyäthylen (HDPE) ist (Anspruch 6).

Bei einer besonders bevorzugten Ausgestaltung des Kabelschutzrohres ist dieses mit einer Deckschicht aus weissem Kunststoff, vorzugsweise aus weissem Polyäthylen, versehen (Anspruch 7). Damit lässt sich bei Sonneneinstrahlung eine übermässige Erhitzung mit entsprechender Verformung des Kabelschutzrohres vermeiden.

In aller Regel wird der Trennschlitz zwischen den beiden Längsrippen nicht unmittelbar im Anschluss an die Herstellung des Rohrprofils angebracht, sondern in einem zeitlich mehr oder weniger nachgelagerten Arbeitsschritt. Mit anderen Worten wird zunächst ein ungeschlitzter Rohling des Kabelschutzrohres geformt. Ein solcher Rohling zur Herstellung eines erfindungsgemässen Kabelschutzrohres, umfasst erfindungsgemäss ein Kunststoffrohr, welches zwei einstückig damit ausgebildete äussere Längsrippen aufweist, die in einem Abstand zueinander angeordnet sind und die einen dazwischen liegenden Mantelstreifen definieren, der zur Ausbildung eines in Längsrichtung verlaufenden Trennschlitzes vorgesehen ist.

Vorteilhafterweise ist der Kabelschutzrohr-Rohling mit einer Deckschicht aus weissem Kunststoff, vorzugsweise aus weissem Polyäthylen, versehen (Anspruch 9). Die erfindungsgemässen Kabelschutzrohr-Rohlinge und entsprechend auch die erfindungsgemässen Kabelschutzrohre werden vorzugsweise mit einem Aussendurchmesser von 90 bis 220 mm und einer Rohrwandstärke von 5 bis 6 mm, einer Breite der Längsrippen von 10 bis 12 mm und einem Abstand zwischen den Längsrippen von 20 bis 24 mm sowie mit einer Wanddicke im Bereich des Längsverschlusses von 8.5 bis 12 mm bereitgestellt.

Die erfindungsgemässe Vorrichtung zur Herstellung eines erfindungsgemässen Kabelschutzrohres umfasst ein Extrusionswerkzeug mit einer zylindrischen Innenform und einer zylindrischen Aussenform, welche einen kreisringförmigen Kanalaustritt aufweist, der im Bereich des vorgesehenen Längsverschlusses zwei aufstehende, den Längsrippen entsprechende Einschnitte aufweist.

Bei einer vorteilhaften Ausgestaltung der Vorrichtung ist dem Extrusionswerkzeug eine Kalibriereinheit nachgeschaltet, welche ein wassergekühltes Kalibrierungsrohr mit einem Innenprofil aufweist, das dem Aussenprofil des Kabelschutzrohres entspricht, wobei das Kalibrierungsrohr von einer rohrförmigen Vakuumkammer umgeben ist, welche an ihren Enden je von einer scheibenförmigen Platte dicht zum Kalibrierungsrohr abgeschlossen ist (Anspruch 11 Es versteht sich, dass die Vakuumkammer mit Mitteln zum Aufbau und zur Aufrechterhaltung eines Unterdrucks im Kammerbereich, welcher das Kalibrierungsrohr einschliesslich des darin befindlichen, noch verformbaren Rohrprofils umgibt, ausgestattet.

Bei einer bevorzugten Ausgestaltung ist die Wasserkühlung von um das Kalibrierungsrohr regelmässig verteilten Wassersprühdüsen gebildet ist (Anspruch 12. Es versteht sich, dass mit den oben definierten Vorrichtungen in aller Regel zunächst ein Kabelschutzrohr-Rohling ohne Längsschnitt geformt wird.

Gemäss dem erfindungsgemässen Verfahren zur Herstellung eines erfindungsgemässen Kabelschutzrohr-Rohlings wird in an sich bekannter Weise heisser Kunststoff kontinuierlich in das Extrusionswerkzeug eingelassen und dort zu einem im Wesentlichen zylindrischen Rohr mit zwei voneinander beabstandeten vorstehenden Längsrippen geformt. Das so gebildete profilierte Rohr wird danach in die nachgeordnete Kalibriereinheit eingeführt und dort unter Wasserkühlung und Unterdruck zu einem durch das Innenprofil der Kalibriereinheit definierten Aussenprofil geformt und schliesslich in gewünschte Kabelschutzrohrabschnitte abgelängt.

Demnach wird beim erfindungsgemässen Verfahren zur Herstellung eines erfindungsgemässen Kabelschutzrohres ein erfindungsgemässer Kabelschutzrohr-Rohling mit einem zwischen den beiden Vorsprüngen in Längsrichtung verlaufenden Trennschlitz versehen.

Weitere Vorteile der Erfindung folgen aus der nachfolgenden Beschreibung, in welcher die Erfindung anhand eines in den schematischen Zeichnungen dargestellten Ausführungsbeispieles näher erläutert wird. Es zeigt:
- Fig. 2: ein erfindungsgemässes Kabelschutzrohr im Querschnitt
- Fig. 3: das Kabelschutzrohr in perspektivischer Darstellung,
- Fig. 4: einen Detailausschnitt der Figur 3,
- Fig. 5: einen Querschnitt durch eine Kalibriereinheit,
- Fig. 6: eine Draufsicht auf den Eintritt der Kalibriereinheit,
- Fig. 7: eine perspektivische Ansicht der Kalibriereinheit;
- Fig. 8: einen Querschnitt durch ein Extrusionswerkzeug, und
- Fig. 9: eine Draufsicht auf den Austritt des Extrusionswerkzeuges,
- Fig. 10: einen erfindungsgemässen Kabelschutzrohr-Rohling im Querschnitt.

In den Figuren sind für dieselben Elemente jeweils dieselben Bezugszeichen verwendet worden und erstmalige Erklärungen betreffen alle Figuren, wenn nicht ausdrücklich anders erwähnt.

In der Figur 2 ist ein Kabelschutzrohr 11 im Querschnitt dargestellt, wobei im Bereich des Längsverschlusses 12 zwei aufstehende Längsrippen 13 vorgesehen sind, welche beidseits eines v-förmigen Trennschlitzes 14 angeordnet sind. In den beiden Längsrippen 13 sind gestrichelt angedeutete Querbohrungen 15 vorgesehen, durch welche ein Verschlussbolzen 16 geführt ist, welcher mittels eines Schnappverschlusses 17 die beiden Längsrippen 13 zueinander einspannt. Die Wanddicke des Kabelschutzrohres 11 ist im Bereich des Längsverschlusses 12 verstärkt ausgebildet. Vorzugsweise ist die Wanddicke in diesem Bereich etwa zweimal die Wanddicke im anderen Bereich. Ferner entspricht die Breite der Längsrippen 13 in etwa der Wanddicke des Kabelschutzrohres 11 im Bereich des Längsverschlusses 12. Vorzugsweise beträgt die Wanddicke des Kabelschutzrohres je nach Durchmesser 5 bis 7 mm, während sich im Bereich des Längsverschlusses 12 eine Wanddicke von 10 bis 14 mm bewährt hat. Das Kabelschutzrohr 11 ist aus einem hochverdichteten Polyäthylen (HDPE) hergestellt.

Die Figuren 3 und 4 zeigen das Kabelschutzrohr 11 in perspektivischer Darstellung.

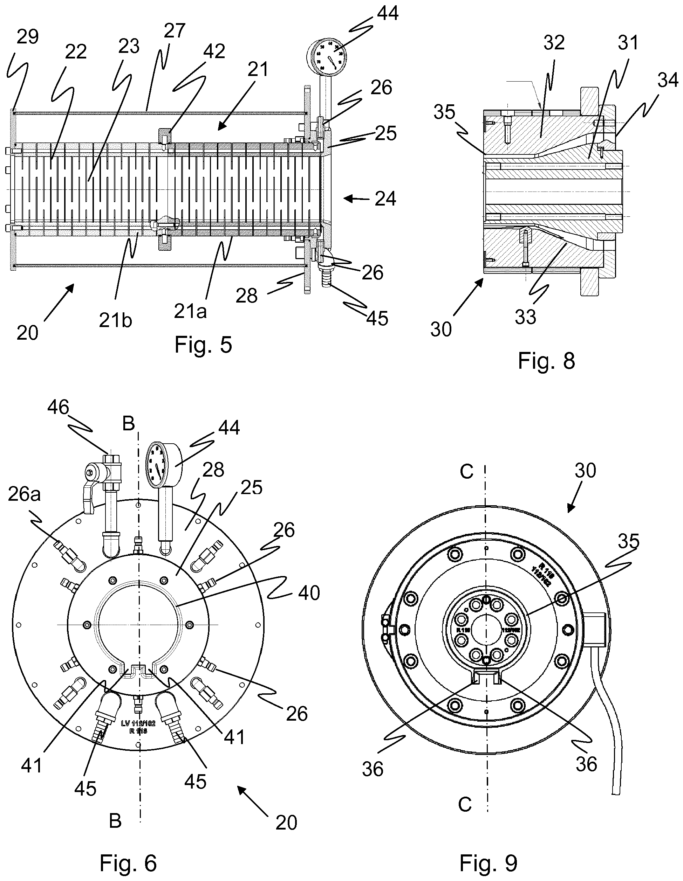

Figur 5 zeigt eine Kalibriereinheit 20 mit einem wassergekühlten Rohr 21, welches Wassersprühdüsen 22 und Absaugschlitze 23 aufweist. Der Rohreintritt 24 ist rechts mit einer Kreisscheibe 25 abgeschlossen, in welcher sechs Wasseranschlüsse 26 vorgesehen sind. Das wassergekühlte Rohr 21 ist von einer rohrförmigen Vakuumkammer 27 beispielsweise aus Plexiglas umgeben, welche auf der rechten Seite von einer kreisförmigen Abdeckplatte 28 mit der Kreisscheibe 25 luftdicht abgeschlossen ist und auf der linken Seite von einer kreisförmigen Abdeckplatte 29, die luftdicht mit dem wassergekühlten Rohr 21 abgeschlossen ist.

Figur 6 zeigt eine Draufsicht auf den Eintritt der Kalibriereinheit 20, wobei deutlich das Profil 40 des herzustellenden Kabelschutzrohres ersichtlich ist. Insbesondere umfasst das Profil 40 einen kreisförmigen Hauptbereich sowie zwei nach aussen gerichtete Einschnitte 41, welche den zu bildenden Längsrippen 13 entsprechend konfiguriert sind. Der Eintritt des Profils 40 ist mit einer Anschrägung für die Einführung des aus dem Extrusionswerkzeugs austretenden Kabelschutzrohr-Rohlings versehen. Die strichpunktierte Linie B-B deutet den Querschnitt der Figur 5 an.

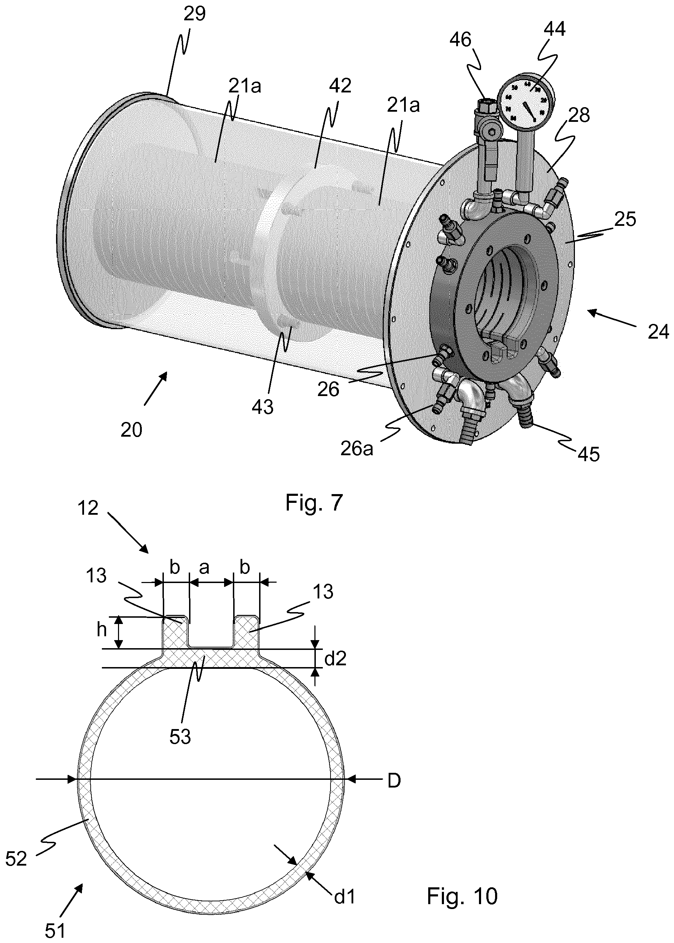

Die räumlichen Verhältnisse an der Eintrittseite der Kalibriereinheit sind aus der perspektivischen Darstellung der Figur 7 ersichtlich. Im gezeigten Beispiel ist das wassergekühlte Rohr 21 aus einem ersten Rohrabschnitt 21a und einem zweiten Rohrabschnitt 21 b gebildet, die über einen Mittelflansch 42 miteinander verbunden sind. Dieser Mittelflansch ist mit Wasserschlauchanschlüssen 43 ausgestattet, welche für die Kühlwasserversorgung des zweiten Rohrabschnitts 21 b vorgesehen sind. Die entsprechende Wasserzuführung erfolgt zweckmässigerweise über weitere Wasseranschlüsse 26a am Rohreintritt 24 und eine Schlauchverbindung innerhalb der Vakuumkammer 27. Die Vakuumkammer 27 ist mit geeigneten Mitteln zur Erzeugung und Regelung des Unterdrucks ausgestattet, insbesondere mit einem Druckmessgerät 44, mit Vakuumanschlüssen 45 und mit einem Belüftungsventil 46.

In Figur 8 ist ein Extrusionswerkzeug 30 dargestellt, das eigens für die Herstellung des Kabelschutzrohres 11 vorgesehen ist, welches eine zylindrische Innenform 31 und eine zylindrische Aussenform 32 aufweist, die einen konisch zulaufenden Ringkanal 33 bilden. Der Kanaleintritt 34 rechts weist einen grösseren Ringdurchmesser auf als der Kanalaustritt 35 links. Figur 9 zeigt eine Draufsicht auf den Kanalaustritt 35, wobei die strichpunktierte Linie C-C die Schnittlinie des Querschnitts der Figur 8 angibt. Wie aus der Figur 9 ersichtlich, ist der Austritt 35 im Wesentlichen kreisringförmig ausgebildet mit zwei abstehenden Einschnitten 36 für die Längsrippen 13.

Der Kanalaustritt 35 des Extrusionswerkzeuges 30 ist in nicht näher dargestellter Weise an den Rohreintritt 24 der Kalibriereinheit 20 mit geeignetem Abstand angeschlossen. Der Kanalaustritt 35 weist dabei dasselbe Profil wie das Innenprofil des wassergekühlten Rohres 21 auf, wobei der Durchmesser des Kanalaustrittes 35 dem aufgerechneten Schwundmass bei der Kalibrierung angepasst ist.

Ein Kabelschutzrohr-Rohling wird nun folgendermassen hergestellt: Von einem nicht-dargestellten Behälter wird Kunststoff, beispielsweise hochverdichtetes Polyäthylen (HDPE), bei einer Temperatur von 120 °C bis 130 °C in das Extrusionswerkzeug 30 eingelassen und daran anschliessend mit einem geringeren Durchmesser in die Kalibriereinheit 20 weitergeführt. Die optionale weisse Deckschicht aus PE wird bereits vor dem Extrusionswerkzeug an der äusseren Umrandung der zugeführten Kunststoffmasse zugesetzt. Hinter der Kalibriereinheit 20 ist ein nicht-dargestellter Abzug, beispielweise aus zwei parallel angeordneten Transportbändern, vorgesehen. Dadurch wird der herzustellende Kabelschutzrohr-Rohling mit einer bestimmten Zugkraft durch die Kalibriereinheit 20 gezogen. Durch Variation der Geschwindigkeit der Transportbänder lässt sich die Zugkraft auf den Kabelschutzrohr-Rohling vergrössern oder verringern, wodurch die definitive Wandstärke zum Durchmesser kalibriert wird. Beim Eintritt in die Kalibriereinheit 20 wird Kunststoffschmelze durch den in der Vakuumkammer 27 herrschenden Unterdruck gegen die Innenwand des wassergekühlten Rohres 21 gezogen, wodurch die endgültige Form des Kabelschutzrohr-Rohlings bestimmt wird. Typischerweise beträgt der Unterdruck in der Vakuumkammer 0.4 bis 0.6 bar, insbesondere ungefähr 0.5 bar. Durch die Wasserkühlung hat der Kabelschutzrohr-Rohling am Austritt der Kalibriereinheit 20 noch eine Temperatur von etwa 40 °C bis 50 °C, d.h. der Kabelschutzrohr-Rohling ist dort im Wesentlichen ausgehärtet und kann somit sofort weiterverarbeitet werden. Der Kabelschutzrohr-Rohling wird endlos hergestellt und jeweils auf eine bestimmte Länge im Bereich von fünf bis zehn Metern abgeschnitten.

Wie aus der Figur 10 verdeutlicht wird, weist der Kabelschutzrohr-Rohling 51 einen zylinderförmigen Bereich 52 sowie einen stegförmig ausgebildeten Längsverschlussbereich 53 auf, von welchem die beiden Längsrippen 13 nach aussen vorstehen. Der zylinderförmige Bereich hat einen Aussendurchmesser D und eine Rohrwandstärke d1. Der Längsverschlussbereich 53 hat eine Wandstärke d2. Die beiden Längsrippen 13 sind im gezeigten Beispiel identisch und haben eine vorstehende Höhe h sowie eine Breite b. Die beiden einander zugewandten Seitenflächen der Längsrippen 13 sind durch einen Abstand a getrennt. All diese Abmessungen gelten auch für das anschliessend aus dem Kabelschutzrohr-Rohling hergestellte Kabelschutzrohr. Bevorzugte Werte der Abmessungen sind in der Tabelle angegeben. Es zeigt sich, dass im Vergleich zu den bisher eingesetzten Kabelschutzrohren mit aufgeschweissten Längsrippen eine Einsparung der Rohrwandstärke um ca. 1 mm mit entsprechendem Gewichtsvorteil erreicht werden kann.

**Tabelle: Beispielhafte Abmessungen (in mm) des Kabelschutzrohres**

| **Nr.** | **D** | **d1** | **d2** | **b** | **h** | **a** |
|---|---|---|---|---|---|---|
| 1 | 92 | 5 | 8.5 | 10 | 15 | 20 |
| 2 | 112 | 5 | 8.5 | 10 | 15 | 20 |
| 3 | 132 | 5 | 8.5 | 10 | 15 | 20 |
| 4 | 163 | 5.5 | 8.5 | 10 | 15 | 20 |
| 5 | 214 | 6 | 8.5 | 10 | 15 | 20 |

Aus dem Kabelschutzrohr-Rohling wird mit einem v-förmigen Messer (nichtdargestellt) der Trennschlitz 14 gebildet und werden mittels eines automatischen Bohrwerkzeuges die Querbohrungen 15 in den Längsrippen 13 hergestellt. Die Bolzen 16 mit dem Schnappverschluss 17 werden dann durch einen Bolzenautomaten durch die Querbohrungen 15 geschoben. Damit ist das einsatzbereite Kabelschutzrohr fertiggestellt.

## Patentansprüche

1. Kabelschutzrohr (11) aus Kunststoff mit einem Längsverschluss (12), welches in Längsrichtung mit einem Trennschlitz (14) versehen ist, wobei der Längsverschluss einen den Trennschlitz überbrückenden Vorsprung umfasst, welcher zur Aufnahme von Verschlussbolzen (16) dient, wobei der Vorsprung aus zwei beidseits des Trennschlitzes (14) in einem Abstand (a) zueinander angeordneten äusseren Längsrippen (13) besteht, welche einstückig mit dem Kabelschutzrohr (11) ausgebildet sind **dadurch gekennzeichnet dass** der Abstand (a) zwischen den beiden Längsrippen (13) das 0.5-bis 2-fache der durchschnittlichen Einzelbreite (b) der Längsrippen beträgt.

2. Kabelschutzrohr nach Anspruch 1, **dadurch gekennzeichnet, dass** der Trennschlitz (14) in Längsrichtung gesehen v-förmig ausgebildet ist.

3. Kabelschutzrohr nach Anspruch 1 oder 2, **dadurch gekennzeichnet, dass** die Wanddicke (d2) im Bereich des Längsverschlusses (12) verstärkt ausgebildet ist.

4. Kabelschutzrohr nach Anspruch 3, **dadurch gekennzeichnet, dass** die Wanddicke (d2) im Bereich des Längsverschlusses (12) das 1.4- bis 2.5-fache der Wanddicke (d1) des Kabelschutzrohres (11) im anderen Bereich ist.

5. Kabelschutzrohr nach Anspruch 3 oder 4, **dadurch gekennzeichnet, dass** die Wanddicke (d2) im Bereich des Längsverschlusses etwa dem 0.8- bis 1.1-fachen der durchschnittlichen Einzelbreite (b) der Längsrippen entspricht.

6. Kabelschutzrohr nach einem der Ansprüche 1 bis 5, **dadurch gekennzeichnet, dass** der Kunststoff ein hochverdichtetes Polyäthylen (HDPE) ist.

7. Kabelschutzrohr nach einem der Ansprüche 1 bis 6, **dadurch gekennzeichnet, dass** es eine Deckschicht aus weissem Kunststoff aufweist.

8. Rohling zur Herstellung eines Kabelschutzrohres nach einem der Ansprüche 1 bis 7, umfassend ein Kunststoffrohr mit zwei einstückig damit ausgebildeten äusseren Längsrippen, die in einem Abstand (a) zueinander angeordnet sind und einen dazwischen liegenden Mantelstreifen definieren, der zur Ausbildung eines in Längsrichtung verlaufenden Trennschlitzes vorgesehen ist, wobei der Abstand (a) zwischen den beiden Längsrippen das 0.5- bis 2-fache der durchschnittlichen Einzelbreite der Längsrippen beträgt.

9. Kabelschutzrohr-Rohling nach Anspruch 8, **dadurch gekennzeichnet, dass** er eine Deckschicht aus weissem Kunststoff aufweist.

10. Vorrichtung zur Herstellung eines Kabelschutzrohres nach einem der Ansprüche 1 bis 7, **dadurch gekennzeichnet, dass** ein Extrusionswerkzeug (30) mit einer zylindrischen Innenform (31) und einer zylindrischen Aussenform (32) vorgesehen ist, welche einen kreisringförmigen Kanalaustritt (35) mit im Bereich des vorgesehenen Längsverschlusses zwei aufstehenden den Längsrippen (13) entsprechenden Einschnitten (36) aufweist.

11. Vorrichtung nach Anspruch 10, **dadurch gekennzeichnet, dass** dem Extrusionswerkzeug (30) eine Kalibriereinheit (20) nachgeschaltet ist, welche ein wassergekühltes Kalibrierungsrohr (21) mit einem Innenprofil aufweist, welches dem Aussenprofil des Kabelschutzrohres (11) entspricht, und das Kalibrierungsrohr (21) von einer rohrförmigen Vakuumkammer (27) umgeben ist, welche an ihren Enden je von einer scheibenförmigen Platte (25, 29) dicht zum Kalibrierungsrohr abgeschlossen ist.

12. Vorrichtung nach Anspruch 11, **dadurch gekennzeichnet, dass** die Wasserkühlung von um das Kalibrierungsrohr (21) regelmässig verteilten Wassersprühdüsen (22) gebildet ist.

13. Verfahren zur Herstellung eines Kabelschutzrohr-Rohlings nach Anspruch 8 oder 9 mittels einer Vorrichtung nach Anspruch 11, wobei heisser Kunststoff kontinuierlich in das Extrusionswerkzeug (30) eingelassen und dort zu einem im Wesentlichen zylindrischen Rohr mit zwei voneinander beabstandeten vorstehenden Längsrippen geformt wird, danach in die nachgeordnete Kalibriereinheit (21) eingeführt und dort unter Wasserkühlung und Unterdruck zu einem durch das Innenprofil der Kalibriereinheit definierten Aussenprofil geformt und schliesslich in gewünschte Kabelschutzrohrabschnitte abgelängt wird.

14. Verfahren zur Herstellung eines Kabelschutzrohres nach einem der Ansprüche 1 bis 7, wobei ein Kabelschutzrohr-Rohling nach Anspruch 8 oder 9 mit einem zwischen den beiden Vorsprüngen in Längsrichtung verlaufenden Trennschlitz versehen wird.

## Claims

1. A cable protection tube (11) made of plastic, with a longitudinal closure (12) which is provided with a separating slit (14) in the longitudinal direction, wherein the longitudinal closure comprises a protrusion bridging the separating slit and serving to receive locking bolts (16), the protrusion consisting of two outer longitudinal ribs (13) which are arranged on the two sides of the separating slit at a distance (a) from each other and which are integrally formed with the cable protection tube (11), **characterized in that** the distance (a) between the two longitudinal ribs (13) is 0.5 to 2 times the average individual width (b) of the longitudinal ribs.

2. The cable protection tube according to claim 1, **characterized in that** the separating slit (14) is configured in a v-shaped manner in longitudinal direction.

3. The cable protection tube according to claim 1 or 2, **characterized in that** the wall thickness (d2) is enhanced in the neighborhood of the longitudinal slit (12).

4. The cable protection tube according to claim 3, **characterized in that** the wall thickness (d2) in the neighborhood of the longitudinal slit (12) is 1.4 to 2.5 times the wall thickness (d1) of the cable protection tube (11) in the remaining region.

5. The cable protection tube according to claim 3 or 4, **characterized in that** the wall thickness (d2) in the neighborhood of the longitudinal slit corresponds to approximately 0.8 to 1.1 times the average individual width (b) of the longitudinal ribs.

6. The cable protection tube according to one of claims 1 to 5, **characterized in that** the plastic is a high density polyethylene (HDPE).

7. The cable protection tube according to one of claims 1 to 6, **characterized in that** it has a cover layer made of white plastic.

8. A blank for the manufacture of a cable protection tube according to one of claims 1 to 7, comprising a plastic tube with two outer longitudinal ribs integrally formed therewith which are arranged at a distance (a) from each other and define a surface strip laying therebetween which is provided for forming a separating slit extending in the longitudinal direction, wherein the distance (a) between the two longitudinal ribs is 0.5 to 2 times the average individual width of the longitudinal ribs.

9. The cable protection tube blank according to claim 8, **characterized in that** it has a cover layer made of white plastic.

10. A device for manufacturing a cable protection tube according to one of claims 1 to 7, **characterized in that** an extrusion tool (30) having a cylindrical inner shape (31) and a cylindrical outer shape (32) and having an annular channel outlet (35) with two upward incisions (36) corresponding to the longitudinal ribs (13) in the neighborhood of the intended longitudinal slit is provided.

11. The device according to claim 10, **characterized in that** a calibration unit (20) which comprises a water-cooled calibration tube (21) with an inner profile corresponding to the outer profile of the cable protection tube (11) is disposed following the extrusion tool and that the calibration tube (21) is surrounded by a tubular vacuum chamber (27) which, at each end thereof, is tightly sealed to the calibration tube by a disc-shaped plate (25, 29).

12. The device according to claim 11, **characterized in that** water cooling is provided by water spraying nozzles (22) which are regularly distributed around the calibration tube (21).

13. A method of manufacturing a cable protection tube blank according to claim 8 or 9 by means of the device according to claim 11, in which method hot plastic is continuously supplied into the extrusion tool (30) where it is formed to a substantially cylindrical tube with two mutually separated protruding longitudinal ribs, subsequently is introduced into the following calibration unit (21) where water cooling and underpressure act to form it with an outer profile defined by the inner profile of the calibration unit and finally is cut to desired cable protection tube sections.

14. A method of manufacturing a cable protection tube blank according to one of claims 1 to 7, in which method a cable protection tube blank according to claim 8 or 9 is provided with a separating slit disposed in longitudinal direction between the two protrusions.

## Revendications

1. Tube de protection de câbles (11) avec une fermeture longitudinale (12) qui est munie d'une fente (14) dans la direction longitudinale, la fermeture longitudinale ayant une saillie chevauchant la fente pour recevoir des goujons de fermeture (16),
- la saillie se composant de deux nervures longitudinales (13) extérieures, de part et d'autre de la fente (14) en étant écartées d'une distance (a), ces nervures longitudinales étant réalisées en une seule pièce avec le tube de protection de câbles (11),
**caractérisé en ce que**
la distance (a) entre les deux nervures longitudinales (13) représente entre 0,5 jusqu'à 2 fois la largeur simple (b) moyenne des nervures longitudinales.

2. Tube de protection de câbles selon la revendication 1,
**caractérisé en ce que**
la fente (14) a une section en V dans la direction longitudinale.

3. Tube de protection de câbles selon la revendication 1 ou 2,
**caractérisé en ce que**
l'épaisseur de paroi (d2) est renforcée dans la région de la fermeture longitudinale (12).

4. Tube de protection de câbles selon la revendication 3,
**caractérisé en ce que**
dans la région de la fermeture longitudinale (12), l'épaisseur de paroi (d2) représente entre 1,4 jusqu'à 2,5 fois l'épaisseur de paroi (d1) du tube de protection de câbles (11) dans une autre zone.

5. Tube de protection de câbles selon la revendication 3 ou 4,
**caractérisé en ce que**
dans la région de la fermeture longitudinale, l'épaisseur de paroi (d2) correspond à environ 0,8 jusqu'à 1,1 fois l'épaisseur simple moyenne (b) des nervures longitudinales.

6. Tube de protection de câbles selon l'une des revendications 1 à 5,
**caractérisé en ce que**
la matière plastique est du polyéthylène haute densité (HDPE).

7. Tube de protection de câbles selon l'une des revendications 1 à 6,
**caractérisé en ce qu'**
il comporte une couche de couverture en matière plastique blanche.

8. Ebauche pour la fabrication d'un tube de protection de câbles selon l'une des revendications 1 à 7 comportant un tube en matière plastique avec deux nervures longitudinales extérieures réalisées en une seule pièce avec celui-ci, et qui sont à la distance (a) l'une de l'autre et définissent une bande d'enveloppe dans leur intervalle qui est prévue pour réaliser une fente de séparation dans la direction longitudinale, la distance (a) entre les deux nervures longitudinales représentant entre 0,5 jusqu'à 2 fois la largeur simple, moyenne des nervures longitudinales.

9. Ebauche de tube de protection de câbles selon la revendication 8,
**caractérisée en ce qu'**
elle a une couche de couverture en matière plastique blanche.

10. Dispositif pour réaliser un tube de protection de câbles selon l'une des revendications 1 à 7,
**caractérisé en ce qu'**
il comporte un outil d'extrusion (30) ayant une forme intérieure (31) cylindrique et une forme extérieure (32) cylindrique, avec une sortie de canal (35) en forme d'anneau de cercle ayant deux nervures longitudinales (13) en saillie avec des encoches (36) correspondantes dans la région prévue pour la fermeture longitudinale.

11. Dispositif selon la revendication 10,
**caractérisé en ce que**
l'outil d'extrusion (30) est suivi d'une unité de calibrage (20) ayant un tube de calibrage (21) refroidi par de l'eau avec un profil intérieur qui correspond au profil extérieur du tube de protection de câbles (11) et le tube de calibrage (21) est entouré par une chambre à vide (27), tubulaire, dont les extrémités sont fermées, de façon étanche par rapport au tube de calibrage, par une plaque en forme de disque (25, 29).

12. Dispositif selon la revendication 11,
**caractérisé en ce que**
le refroidissement par eau est fait par des buses de pulvérisation d'eau (22) réparties régulièrement autour du tube de calibrage (21).

13. Procédé de réalisation d'une ébauche de tube de protection de câbles selon la revendication 8 ou 9 à l'aide d'un dispositif selon la revendication 11 selon lequel on introduit en continu une matière plastique chaude dans l'outil d'extrusion (30) et on la forme pour obtenir un tube essentiellement cylindrique avec deux nervures longitudinales, en saillie, écartées, puis on l'introduit dans l'unité de calibrage (21) et on forme le profil extérieur défini par le profil intérieur de l'unité de calibrage, en dépression, et enfin on coupe des segments de tube de calibrage à la longueur souhaitée.

14. Procédé de réalisation d'un tube de protection de câbles selon l'une des revendications 1 à 7,
**caractérisé en ce qu'**
on munit une ébauche de tube de protection de câbles selon la revendication 8 ou 9 d'une fente de séparation longitudinale entre les deux saillies.
